(19) Europäisches Patentamt

European Patent Office

Office européen des brevets

(11) Numéro de publication : **0 441 699 A1**

(12) **DEMANDE DE BREVET EUROPEEN**

(21) Numéro de dépôt : 91400274.6

(22) Date de dépôt : 05.02.91

(51) Int. Cl.⁵ : **G06K 15/00**

(30) Priorité : 08.02.90 FR 9001476

(43) Date de publication de la demande :
**14.08.91 Bulletin 91/33**

(84) Etats contractants désignés :
**BE DE FR GB NL**

(71) Demandeur : **IMECOM**
**11, avenue de la Gare**
**F-78181 Saint-Quentin-en-Yvelines (FR)**

(72) Inventeur : **Krieg, Stéphane**
**9, rue Victor Hugo**
**F-92400 Courbevoie (FR)**
Inventeur : **De Baudus, Bruno, Michel, Marie C.**
**40, rue Pierre Arnoux**
**F-92190 Meudon (FR)**

(74) Mandataire : **Arnaud, Jean Pierre Alfred**
**Cabinet Arnaud 94 rue Saint-Lazare**
**F-75009 Paris (FR)**

(54) **Appareil formant contrôleur d'imprimante et convertisseur de données pour micro-ordinateur.**

(57) L'invention concerne un appareil, par exemple une carte enfichable, pour micro-ordinateur qui comporte plusieurs dispositifs de conversion de données (16, 26), commandés par un circuit d'aiguillage (18) et permettant la formation de signaux vidéo transmis par une sortie (14) à un moteur d'imprimante, ou de signaux en format télécopie renvoyés par le bus du micro-ordinateur. Elle se rapporte aux contrôleurs d'imprimantes et de télécopie.

Fig 1

# APPAREIL FORMANT CONTROLEUR D'IMPRIMANTE ET CONVERTISSEUR DE DONNEES POUR MICRO-ORDINATEUR

La présente invention concerne un appareil destiné aux ordinateurs, notamment aux micro-ordinateurs, et destiné à remplir plusieurs fonctions de conversion de données, lui permettant de constituer à la fois un contrôleur d'imprimante et au moins un dispositif de traitement de données de télécopie.

On décrit l'invention dans son application au traitement de données en coopération avec un micro-ordinateur, soit sous forme d'une carte destinée à être enfichée dans un connecteur d'extension d'un tel micro-ordinateur, soit sous forme d'un appareil indépendant, destiné à être relié à un micro-ordinateur.

L'un des appareils périphériques les plus courants des micro-ordinateurs est une imprimante. De manière générale, une imprimante comporte un moteur d'imprimante, c'est-à-dire un système mécanique, électro-mécanique et électronique capable d'assurer une impression. Ce moteur d'imprimante est commandé par un "contrôleur d'imprimante" qui assure la liaison entre le micro-ordinateur qui lui transmet des données et des commandes et le moteur d'imprimante. Le moteur d'imprimante, dans le cas d'une imprimante laser, est commandé par un "signal vidéo" qui est formé par le contrôleur d'imprimante qui reçoit des données du micro-ordinateur.

Dans le présent mémoire, les données transmises par le micro-ordinateur au contrôleur d'imprimante sont appelées "données en format orienté application", étant donné que ces données ont été formées par mise en oeuvre d'applications dans un micro-ordinateur. De même, les données transmises par le contrôleur au moteur d'imprimante sont appelées "données en format vidéo". Des données en format orienté application peuvent être sous forme de fichier texte ou sous forme de graphique par exemple.

Il existe actuellement un certain nombre de langages permettant des communications entre le micro-ordinateur et le contrôleur d'imprimante. Par exemple, des langages couramment utilisés, constituant des protocoles normalisés, sont les langages PCL ("HP LaserJet"), "Truelmage" et "PostScript". Ces protocoles sont couverts par l'expression générale utilisée dans le présent mémoire "données en format orienté application".

Bien que le contrôleur d'un moteur d'imprimante soit le plus souvent incorporé au boîtier de l'imprimante, on sait déjà réaliser des contrôleurs d'imprimante sous forme de cartes séparées, montées dans un micro-ordinateur, le boîtier d'imprimante ne contenant que le moteur d'imprimante.

On connaît aussi des cartes destinées à être incorporées aux micro-ordinateurs et permettant la gestion de télécopie. Dans un système de télécopie, des données à un format particulier, provenant par exemple d'un lecteur avec un format particulier appelé dans le présent mémoire "format orienté télécopie", sont transmises par un modulateur-démodulateur (modem), par mise en oeuvre de protocoles convenables, le long d'une ligne de communications en "format télécopie", c'est-à-dire en format comprenant les données en format orienté télécopie et les différents signaux permettant la gestion de la communication. Une telle carte de télécopie comporte, en plus du modem, des circuits destinés à transmettre des données qui peuvent être reçues par un contrôleur d'imprimante qui assure alors l'impression de la télécopie sur papier ordinaire. Ces cartes de télécopie peuvent recevoir des données sous forme d'un fichier texte et les transformer en données en format orienté télécopie.

Ainsi, un micro-ordinateur comprenant un système de télécopie et disposant d'une imprimante nécessite un double traitement des données de télécopie, à la fois sur la carte de télécopie et dans le contrôleur d'imprimante.

L'invention concerne un appareil destiné à un micro-ordinateur, éventuellement sous forme d'une carte enfichable, et comprenant une combinaison originale d'éléments remplissant des fonctions particulières. Plus précisément, les fonctions exécutées par l'appareil selon l'invention sont des fonctions de contrôleur d'imprimante et de convertisseur de données destiné à réaliser les conversions de données normalement exécutées dans les systèmes de télécopie. Cette réalisation permet un seul traitement des données reçues de télécopie, et permet l'obtention d'une grande vitesse de travail.

Dans un mode de réalisation, l'appareil ne comporte pas de modulateur-démodulateur de télécopie, celui-ci étant disposé ailleurs dans un micro-ordinateur ou en dehors de celui-ci. Dans un autre mode de réalisation, l'appareil contient un modulateur-démodulateur de télécopie et d'autres composants lui permettant de jouer le rôle d'un télécopieur, par exemple de groupe III ou IV. Dans ce cas, il est aussi avantageux que certaines données en format orienté télécopie soient transmises à l'ordinateur associé à l'appareil pour être conservées sur le disque dur de cet ordinateur.

Plus précisément, l'invention concerne un appareil qui comporte une entrée de données en format orienté application, une entrée de données en format orienté télécopie, une sortie de données en format orienté télécopie, une sortie de données en format vidéo, un premier dispositif relié à l'entrée de données en format orienté application et destiné à effectuer une première conversion de données en format orienté application en données en format vidéo et à transmettre ces données en format vidéo à la sortie de données en format vidéo, un second dispositif relié à l'entrée de données en format orienté application et destiné à effectuer une seconde conversion de données en format orienté application en données en format orienté télécopie et à transmettre ces données en format orienté télécopie à la sortie de données en format orienté télécopie, et un troisième dispositif relié à l'entrée de données en format orienté télécopie et destiné à effectuer une troisième conversion de données en format orienté télécopie en données en format vidéo et à transmettre ces données en format vidéo à la sortie vidéo.

Dans un premier mode de réalisation, l'entrée de données en format orienté application et l'entrée de données en format orienté télécopie sont formées par un seul connecteur. Le connecteur peut comporter en outre la sortie de données en format orienté télécopie. Il est alors avantageux que l'appareil constitue une carte enfichable dans un ordinateur, et le connecteur est un connecteur de bus de la carte.

Dans un autre mode de réalisation, l'entrée de données en format orienté télécopie et la sortie de données en format orienté télécopie sont formées par un seul connecteur, et le troisième dispositif de conversion de données est en outre destiné à exécuter les fonctions de gestion d'un télécopieur et est aussi relié à la sortie de données en format orienté télécopie. Il est alors avantageux que l'appareil constitue une carte enfichable dans un ordinateur, et que l'entrée de données en format orienté application soit un connecteur de bus de la carte.

Il est avantageux que l'appareil comporte en outre un dispositif destiné à aiguiller les données en format orienté application soit vers le premier dispositif de conversion, soit vers le second dispositif de conversion.

Il est avantageux que l'appareil comporte en plus un quatrième dispositif destiné à effectuer une quatrième conversion de données en format orienté application en données en un autre format orienté application, et à transmettre les données à l'autre format orienté application à une sortie de données en format orienté application, par exemple au connecteur de bus dans le cas d'une carte enfichable. Par exemple, parmi les deux différents formats orientés application, l'un est un format texte et l'autre est un format graphique. Il est alors avantageux que le dispositif d'aiguillage soit destiné à aiguiller les données en format orienté application qu'il reçoit soit vers le premier dispositif de conversion, soit vers le second dispositif de conversion, soit vers le quatrième dispositif de conversion.

De préférence, l'appareil comporte un dispositif de sélection d'un format vidéo parmi plusieurs formats vidéo.

Dans un mode de réalisation particulièrement avantageux, les dispositifs de conversion et le dispositif d'aiguillage sont constitués par des composants électroniques comprenant au moins un microprocesseur, une mémoire morte et une mémoire à accès direct. Il est alors avantageux que la mémoire morte comporte au moins un module de mémoire comprenant des données relatives à une bibliothèque de formats orientés application et/ou au moins un module de mémoire comprenant des données relatives à une bibliothèque de formats vidéo.

L'invention concerne aussi un micro-ordinateur qui comporte un appareil tel que défini dans les précédents paragraphes, sous forme d'une carte enfichable, et une autre carte munie d'un modulateur-démodulateur de télécopie.

D'autres caractéristiques et avantages de l'invention ressortiront mieux de la description qui va suivre, faite en référence au dessin annexé sur lequel :

la figure 1 est un diagramme synoptique représentant la disposition des principaux éléments d'un appareil selon l'invention ; et

la figure 2 est un diagramme synoptique analogue à la figure 1 mais permettant l'exécution d'opérations supplémentaires.

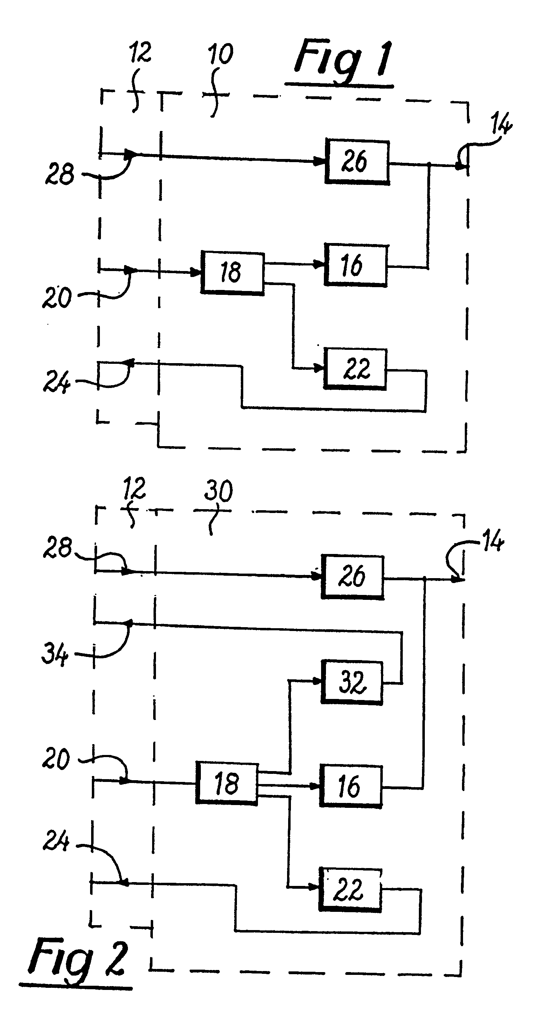

La figure 1 représente le diagramme synoptique fondamental d'un appareil selon l'invention. Cet appareil, désigné de façon générale par la référence 10, est décrit dans la suite dans un mode de réalisation constituant une carte enfichable dans un micro-ordinateur. Cependant, il peut aussi être sous forme séparée d'un ordinateur, comme indiqué dans la description qui précède et dans les revendications annexées.

La carte 10 comprend un connecteur enfichable de bus 12 et une sortie de signaux en format vidéo 14. De préférence, la sortie des signaux vidéo est formée sur le côté tourné vers l'arrière du micro-ordinateur, c'est-à-dire sur le petit côté adjacent au connecteur 12 de bus.

La carte comporte un premier dispositif 16 destiné à effectuer une première conversion de données en format orienté application qui lui sont transmises par un circuit d'aiguillage 18 qui reçoit lui-même ces données en format orienté application à l'entrée 20 formée par le connecteur de bus 12. Le premier dispositif de conversion 16 transmet des données en format vidéo à la sortie 14.

Un second dispositif 22 de conversion reçoit des données en format orienté application du circuit d'aiguillage 18. Ainsi, le circuit d'aiguillage transmet ces données en format orienté application soit au premier dispositif 16 soit au second dispositif 22 de conversion. Ce dernier transforme les données en format orienté application en données en format orienté télécopie qu'il renvoie en 24, c'est-à-dire par le connecteur 12 de bus de données. Ces données en format orienté télécopie sont destinées à parvenir à un modem de télécopie, avec interposition le plus souvent d'un circuit tampon.

Un troisième dispositif 26 de conversion reçoit en 28, c'est-à-dire par le connecteur de bus 12, des données en format orienté télécopie, provenant d'un modem de télécopie par l'intermédiaire du bus de données ou d'un dispositif intermédiaire de mémorisation (par exemple, une mémoire de masse à "disque dur") et transmet des données en format vidéo, à la sortie 14.

Ainsi, le connecteur 12 de bus est destiné à être connecté au bus de données du micro-ordinateur, et la sortie vidéo 14 est destinée à être reliée à un moteur d'imprimante.

Les divers dispositifs de conversion comprennent essentiellement un circuit tampon d'entrée, un circuit tampon de description de page de données, et une mémoire en mode point. Cette mémoire en mode point a une résolution qui dépend du récepteur des données. Par exemple, cette résolution n'est pas la même en général pour une imprimante et pour la télécopie.

L'expression "format orienté application" désigne pratiquement n'importe quel format de données traité par un micro-ordinateur et qui sont destinées à être transmises à une imprimante. Il peut s'agir de textes, de graphiques, etc. avec n'importe quelle présentation, destinés à être imprimés. Le protocole le plus courant en France est le langage PCL ("HP Laser-Jet"). Le format d'impression vidéo est le plus souvent un format à 120 points par centimètre (300 points par pouce) dans le cas des imprimantes laser. Cependant, ce format dépend des caractéristiques du moteur d'imprimante et peut varier en général entre 65 et 240 points par centimètre (160 et 600 points par pouce).

Le format orienté télécopie a une résolution qui est habituellement de 38,5 ou 77 points par centimètre (98 ou 195 points par pouce) dans le sens vertical et de 80 points par centimètre (200 points par pouce) dans le sens horizontal. Il s'agit d'une résolution qui est inférieure en général à la résolution des imprimantes laser. Cependant, certains formats utilisent ou envisagent d'utiliser une meilleure résolution (jusqu'à 160 points par centimètre, soit 400 points par pouce). Ces données subissent aussi une certaine compression accélérant la transmission en l'absence d'informations. Ces données sont donc codées spécifiquement (code Huffman, code Read). Bien entendu, ce format peut être sélectionné parmi divers formats disponibles (par exemple de type groupe III ou groupe IV). Le format orienté télécopie peut aussi être le format Télétex ou un format analogue.

Il est parfois utile de transformer des fichiers d'un format orienté application en un autre format orienté application, par exemple de transformer un fichier texte en un fichier graphique. Dans ce cas, le second mode de réalisation de l'invention, représenté sur la figure 2, est utile.

Dans le mode de réalisation de la figure 2, une carte 30 comporte un connecteur de bus 12 et une sortie vidéo 14 qui sont identiques au connecteur de bus et à la sortie vidéo du premier mode de réalisation. En plus des éléments représentés sur la figure 1 et portant les mêmes références sur la figure 2, la carte 30 comporte un quatrième dispositif 32 de conversion de données ayant un format orienté application en données en un autre format orienté application. Ces dernières données sont transmises en 34 par le connecteur de bus 12. Dans ce cas, le circuit d'aiguillage 18 permet la transmission des données en format orienté application non seulement aux premier et au second dispositifs 16 et 22 de conversion mais aussi au quatrième dispositif de conversion 32.

Bien qu'on ait indiqué que la sortie 14 transmettait des données en format vidéo, comme ce format vidéo doit être adapté au moteur d'imprimante qui le reçoit, il est avantageux que la carte 30 porte un circuit permettant l'adaptation du format vidéo au moteur particulier d'imprimante. Plus précisément, la carte comporte un dispositif de sélection du format vidéo particulier du moteur d'imprimante parmi plusieurs formats vidéo qui sont préalablement conservés dans la mémoire morte portée par la carte. En particulier, la carte peut comporter plusieurs sorties vidéo, ayant des formats différents.

On a représenté, sur les figures 1 et 2, des rectangles pour désigner les dispositifs de conversion de données et le circuit d'aiguillage. Bien entendu, ces différents éléments peuvent aussi être réalisés sous forme d'un ensemble à microprocesseur, comprenant un microprocesseur, une mémoire morte et une mémoire à accès directe. Les fonctions de conversion de données et d'aiguillage sont alors réalisées par logiciel.

Il est alors commode d'utiliser des modules de mémoire morte, contenant chacun des données relatives à une bibliothèque de formats orientés application, à une bibliothèque de format vidéo et/ou à une bibliothèque de formats orientés télécopie.

Bien qu'on ait décrit un appareil sous forme d'une carte enfichable dans un ordinateur, il peut aussi être séparé de l'ordinateur et placé dans un autre boîtier que celui-ci. Dans ce cas, les fonctions du connecteur de bus 12 sont remplies par un ou plusieurs connecteurs séparés.

Dans une variante, l'appareil exécute lui même les fonctions d'un télécopieur, si bien qu'il n'est pas nécessaire que l'ordinateur associé comporte une carte spécialisée dans la gestion des opérations de télécopie. Ces fonctions de télécopie sont alors exécutées par un dispositif qui remplace le dispositif 26 de conversion et qui est en outre relié à la sortie 24 de données en format orienté télécopie. Dans le cas de cette variante, il est aussi avantageux que l'appareil comporte une entrée et une sortie supplémentaires de données en format orienté télécopie destinées à l'échange de telles données avec l'ordinateur associé, notamment pour la mémorisation de telles données sur le disque dur de l'ordinateur. Dans tous ces cas également, l'appareil peut être réalisé sous forme d'une carte enfichable.

## Revendications

1. Appareil de conversion de données, caractérisé en ce qu'il comporte :
   - une entrée (20) de données en format orienté application,
   - une entrée (28) de données en format orienté télécopie,
   - une sortie (24) de données en format orienté télécopie,
   - une sortie (14) de données en format vidéo,
   - un premier dispositif (16) relié à l'entrée de données en format orienté application et destiné à effectuer une première conversion de données en format orienté application en données en format vidéo et à transmettre ces données en format vidéo à la sortie (14) de données en format vidéo,
   - un second dispositif (22) relié à l'entrée de données en format orienté application et destiné à effectuer une seconde conversion de données en format orienté application en données en format orienté télécopie et à transmettre ces données en format orienté télécopie à la sortie (24) de données en format orienté télécopie, et
   - un troisième dispositif (26) relié à l'entrée (28) de données en format orienté télécopie et destiné à effectuer une troisième conversion de données en format orienté télécopie en données en format vidéo et à transmettre ces données en format vidéo à la sortie vidéo (14).

2. Appareil selon la revendication 1, caractérisé en ce que l'entrée (20) de données en format orienté application et l'entrée (28) de données en format orienté télécopie, et éventuellement la sortie (24) de données en format orienté télécopie, sont formées par un seul connecteur.

3. Appareil selon la revendication 1, caractérisé en ce que l'entrée (28) de données en format orienté télécopie et la sortie (24) de données en format orienté télécopie sont formées par un seul connecteur, et le troisième dispositif (26) de conversion de données est en outre destiné à exécuter les fonctions de gestion d'un télécopieur et est aussi relié à la sortie (24) de données en format orienté télécopie.

4. Appareil selon l'une des revendications 2 et 3, caractérisé en ce qu'il constitue une carte enfichable dans un ordinateur, et le connecteur est un connecteur de bus (12) de la carte.

5. Appareil selon l'une quelconque des revendications précédentes, caractérisé en ce qu'il comporte en plus un quatrième dispositif (32) destiné à effectuer une quatrième conversion de données en format orienté application en données en un autre format orienté application, et à transmettre les données à l'autre format orienté application à une sortie (34) de données en format orienté application.

6. Appareil selon l'une quelconque des revendications précédentes, caractérisé en ce qu'il comporte un dispositif (18) destiné à aiguiller les données reçues en format orienté application soit vers le premier dispositif de conversion (16), soit vers le second dispositif de conversion (22), soit éventuellement vers le quatrième dispositif de conversion (32).

7. Appareil selon l'une quelconque des revendications précédentes, caractérisé en ce qu'il comporte un dispositif de sélection d'un format vidéo parmi plusieurs formats vidéo.

8. Appareil selon l'une quelconque des revendications précédentes, caractérisé en ce que les dispositifs de conversion (16, 22, 26, 32) et le dispositif d'aiguillage (18) sont constitués par des composants électroniques comprenant au moins un microprocesseur, une mémoire morte et une mémoire à accès direct.

9. Appareil selon la revendication 8, caractérisé en ce que sa mémoire morte comporte au moins un module de mémoire comprenant des données relatives à une bibliothèque de formats orientés application, ou au moins un module de mémoire comprenant des données relatives à une bibliothèque de formats vidéo.

10. Micro-ordinateur, caractérisé en ce qu'il comporte une carte enfichable (10, 30) selon la revendication 4, et une autre carte munie d'un modulateur-démodulateur de télécopie.

_Fig 1_

_Fig 2_

Office européen
des brevets

**RAPPORT DE RECHERCHE EUROPEENNE**

Numero de la demande

EP 91 40 0274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0273136 (HONEYWELL BULL INC)<br>* abrégé; revendications 1-8 *<br>* page 4, lignes 3 - 22 * | 1,7-9 | G06K15/00 |
| A | US-A-4759053 (SATOMI ET AL.)<br>* abrégé; figure 1 *<br>* colonne 1, lignes 5 - 45; revendications 1-4 * | 1, 5,<br>8-10 | |
| A | US-A-4652934 (MUROYA ET AL.)<br>* abrégé *<br>* colonne 1 - colonne 2, ligne 37;<br>revendications 1-3 * | 1, 6-10 | |

|  |  |
|---|---|
|  | **DOMAINES TECHNIQUES RECHERCHES (Int. Cl.5 )** |
|  | G06K<br>H04N<br>G06F |

Le présent rapport a été établi pour toutes les revendications

| Lieu de la recherche | Date d'achèvement de la recherche | Examinateur |
|---|---|---|
| LA HAYE | 15 AVRIL 1991 | BEAUCE G.Y.G. |

EPO FORM 1503 03.82 (P0402)

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant